# EUROPEAN PATENT APPLICATION

(11) **EP 4 620 811 A1**
(43) Date of publication of application: **24.09.2025**
(21) Application number: 22970017.4
(22) Date of filing: 27.12.2022
(51) Int. Cl.: B64C 39/02, B64D 1/16, B64U 10/14, B64U 101/40

(54) **UNMANNED AERIAL VEHICLE, UNMANNED AERIAL VEHICLE CONTROL SYSTEM, AND UNMANNED AERIAL VEHICLE MANAGEMENT DEVICE**

(71) Applicant: Kubota Corporation, Osaka 556-8601 (JP)
(72) Inventor: SEINO, Kohei, Sakai-shi, Osaka 590-0908 (JP)
(74) Representative: Cabinet Beau de Loménie
(86) International application number: PCT/JP2022/048155
(87) International publication number: WO 2024/142223

(57) **Abstract**

A control system includes a communication device to communicate with a management device to manage agricultural work performed by an unmanned aerial vehicle, and a control device to control operation of the unmanned aerial vehicle. The control device requests permission from the management de-vice, via the communication device, to activate functions associated with planned agricultural work before flight begins, and activates the functions when permitted by the management device.

## Description

### TECHNICAL FIELD

The present disclosure relates to unmanned aerial vehicles, control systems for unmanned aerial vehicles, and management devices for unmanned aerial vehicles.

### BACKGROUND ART

An unmanned aerial vehicle (UAV) is an aircraft that structurally cannot accommodate human occupants and is capable of flight through remote control or autonomous operation. A rotary-wing type unmanned aerial vehicle is a UAV that generates lift using propellers, namely rotary wings, which rotate around an axis. A small unmanned aerial vehicle equipped with multiple rotary wings (Multi-Rotor UAV) is also called a "drone", "multirotor", or "multicopter", and is widely used for applications including aerial photography, surveying, logistics, and agricultural spraying.

Patent Document No. 1 describes an unmanned aerial vehicle (unmanned flying body) that changes its flight position in coordination with the operation of an agricultural machine.

### CITATION LIST

### PATENT LITERATURE

Patent Document No. 1: Japanese Patent Application Publication No. 2022-104737

### SUMMARY OF INVENTION

### TECHNICAL PROBLEM

The present disclosure provides technology to reduce the risk of unauthorized use of agricultural unmanned aerial vehicles.

### SOLUTION TO PROBLEM

In an exemplary and non-limiting embodiment, the control system for an unmanned aerial vehicle of the present disclosure includes: a communication device configured to communicate with a management device to manage agricultural work performed by the unmanned aerial vehicle; and a control device configured to control operation of the unmanned aerial vehicle. The control device is configured, prior to start of flight, to request permission from the management device, via the communication device, to activate functions associated with planned agricultural work, and activate the functions when permitted by the management device.

In an exemplary and non-limiting embodiment, the management device for an unmanned aerial vehicle of the present disclosure includes: a communication device configured to communicate with the unmanned aerial vehicle; a storage device to store work plans for the unmanned aerial vehicle; and a processing device configured, when the communication device receives a request from the unmanned aerial vehicle for permission to activate functions associated with planned agricultural work, to determine whether to permit activation based on the request and the work plans, and to send a signal indicating permission or denial to the unmanned aerial vehicle via the communication device.

### ADVANTAGEOUS EFFECTS OF INVENTION

According to embodiments of the present disclosure, the risk of unauthorized use of agricultural unmanned aerial vehicles can be reduced.

### BRIEF DESCRIPTION OF DRAWINGS

FIG. **1A** is a block diagram schematically showing several examples of rotation drive devices for rotating rotors in an unmanned aerial vehicle equipped with a plurality of rotors.
FIG. **1B** is a plan view schematically showing one example of a basic configuration of an unmanned aerial vehicle equipped with a plurality of rotors.
FIG. **1C** is a side view schematically showing one example of a basic configuration of an unmanned aerial vehicle equipped with a plurality of rotors.
FIG. **1D** is a plan view schematically showing another example of a basic configuration of an unmanned aerial vehicle equipped with a plurality of rotors.
FIG. **2A** is a block diagram showing a basic configuration example of a battery-driven multicopter.
FIG. **2B** is a block diagram showing a basic configuration example of a series hybrid drive type multicopter.
FIG. **2C** is a block diagram showing a basic configuration example of a parallel hybrid drive type multicopter.
FIG. **3** is a diagram showing an example of a system configuration including a multicopter.
FIG. **4A** is a diagram showing an example of processing performed between a multicopter and a management device.
FIG. **4B** is a diagram showing another example of processing performed between a multicopter and a management device.
FIG. **5** is a flowchart showing an example of processing executed by a control device.
FIG. **6** is a flowchart showing an example of processing executed by a processing device of the management device.
FIG. **7** is a diagram showing an example of a work plan.
FIG. **8** is a diagram schematically showing an example of an environment in which a multicopter flies.
FIG. **9** is a diagram schematically showing a multicopter flying while performing agricultural work within a work area.
FIG. **10** is a diagram showing an example where activation is not permitted.
FIG. **11** is a block diagram showing an example of the hardware configuration of a control device.

### DESCRIPTION OF EMBODIMENTS

An unmanned aerial vehicle equipped with a plurality of rotors includes a rotation drive device that rotates the rotors (hereinafter referred to as "propellers"). Hereinafter, such an unmanned aerial vehicle is referred to as a "multicopter".

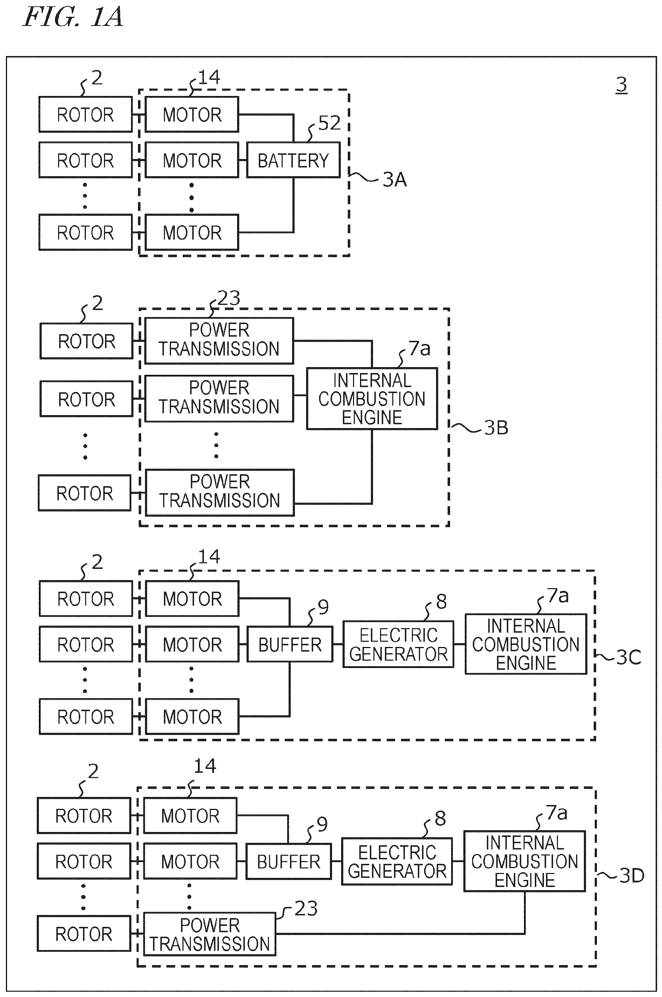

The configuration of rotation drive devices equipped in multicopters exists in various forms. FIG. **1A** is a schematic block diagram showing four examples of rotation drive device **3** in the present disclosure.

The first rotation drive device **3A** shown in FIG. **1A** includes a plurality of electric motors (hereinafter referred to as "motors") **14** that rotate a plurality of rotors **2,** and a battery **52** that stores electric power to be supplied to each motor **14.** The battery **52** is, for example, a secondary battery such as a polymer-type lithium-ion battery. Each rotor **2** is connected to the output shaft of its corresponding motor **14** and is rotated by the motor **14.** To increase payload and/or flight duration, it is necessary to increase the power storage capacity of battery **52.** While the power storage capacity of battery **52** can be increased by making battery **52** larger, enlarging battery **52** leads to an increase in weight.

The second rotation drive device **3B** shown in FIG. **1A** includes a power transmission system **23** mechanically connected to rotor **2,** and an internal combustion engine **7a** that provides driving force (torque) to power transmission system **23.** The power transmission system **23** includes mechanical components such as gears or belts and transmits torque from the output shaft of internal combustion engine **7a** to rotor **2.** The internal combustion engine **7a** can efficiently generate mechanical energy through fuel combustion. Examples of internal combustion engine **7a** may include gasoline engines, diesel engines, and hydrogen engines. Additionally, the number of internal combustion engines **7a** included in rotation drive device **3B** is not limited to one.

The third rotation drive device **3C** shown in FIG. **1A** includes a plurality of motors **14,** a power buffer **9** that stores electric power to be supplied to each motor **14,** an electric generator **8** such as an alternator that generates electric power, and an internal combustion engine **7a** that provides mechanical energy for power generation to the electric generator **8.** While a typical example of power buffer **9** is a battery such as a secondary battery, it may also be a capacitor. In the third rotation drive device **3C,** even when the power buffer **9** does not have a large power storage capacity, it is possible to increase payload and/or flight duration because the electric generator **8** generates electric power using the driving force (mechanical energy) of internal combustion engine **7a.** This type of drive is called "series hybrid drive". The electric generator **8** and internal combustion engine **7a** in series hybrid drive are called a "range extender" as they extend the flight distance of the multicopter.

The fourth rotation drive device **3D** shown in FIG. **1A** includes a plurality of motors **14,** a power buffer **9** that stores electric power to be supplied to each motor **14,** an electric generator **8** such as an alternator that generates electric power, an internal combustion engine **7a** that provides driving force to the electric generator **8** for power generation, a power transmission system **23** that transmits driving force generated by the internal combustion engine **7a** to the rotor **2** to rotate the rotor **2.** At least one rotor **2** of the plurality of rotors **2** is rotated by the internal combustion engine **7a,** while other rotors **2** are rotated by the motor **14.** In the fourth rotation drive device **3D,** since mechanical energy generated by internal combustion engine **7a** can be utilized for rotor rotation without conversion to electrical energy, energy utilization efficiency can be enhanced. This type of drive is called "parallel hybrid drive".

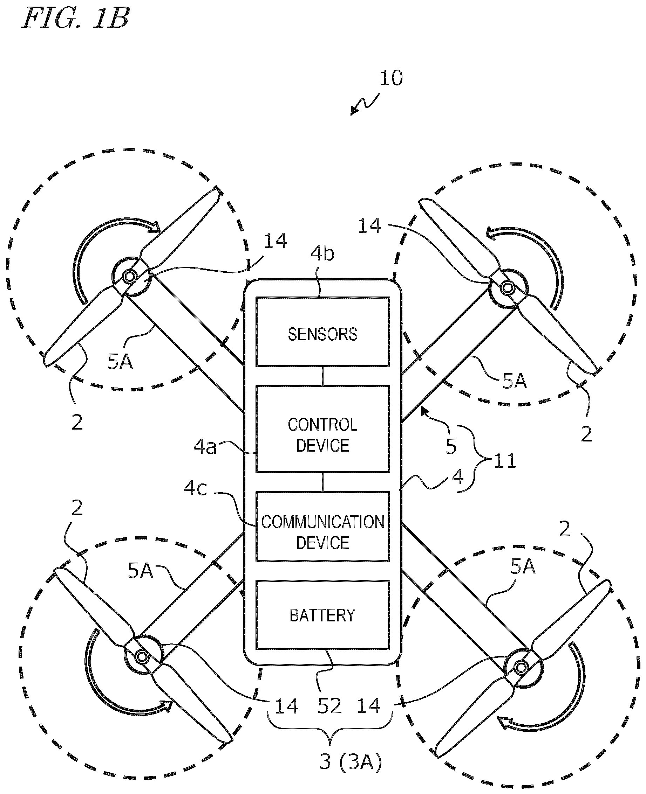

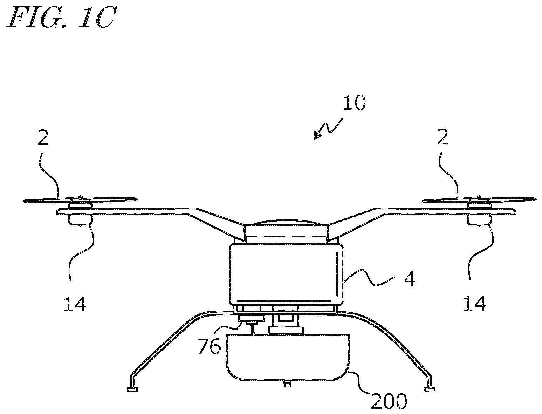

FIG. **1B** is a plan view schematically showing a basic configuration example of multicopter **10.** In the configuration example of FIG. **1B****,** a rotation drive device **3** is equipped with the first rotation drive device **3A** shown in FIG. **1A****.** That is, in this example, rotation drive device **3 (3A)** includes motors **14** and a battery **52.** FIG. **1C** is a side view schematically showing the multicopter **10.**

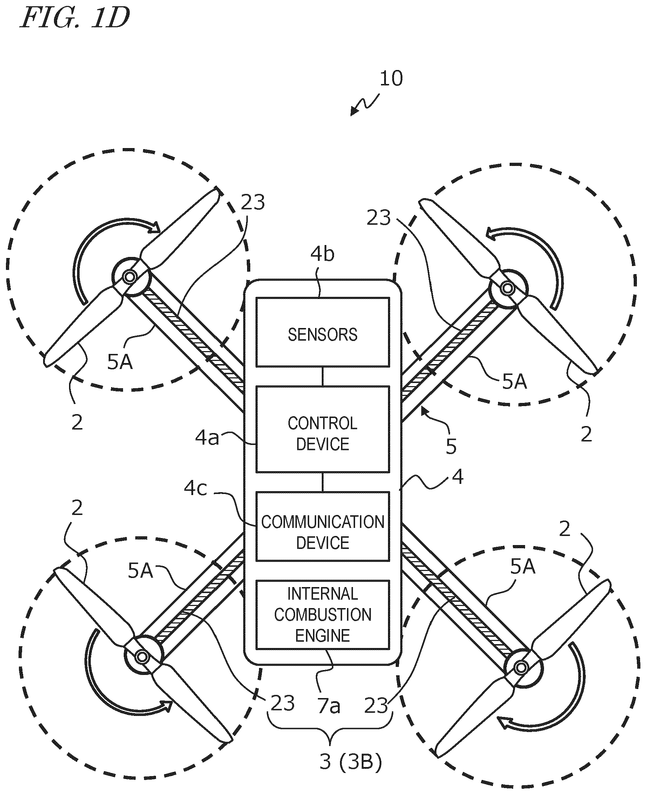

A multicopter **10** shown in Figs. **1****B** and **1C** includes a plurality of rotors **2,** a main body **4,** and a body frame **5** that supports rotors **2** and main body **4.** The body frame **5** supports the main body **4** at its central portion and supports the plurality of rotors **2** rotatably at the plurality of arms **5A** extending outward from the central portion. The motors **14** that rotate rotors **2** are provided near the ends of each arm **5A.** The main body **4** and body frame **5** may be collectively referred to as "body **11".**

In the example of FIG. **1B****,** the multicopter **10** is a quad-type multicopter (quadcopter) equipped with four rotors **2.** The rotors **2** positioned on the same diagonal line rotate in the same direction (clockwise or counterclockwise), while rotors **2** positioned on different diagonal lines rotate in opposite directions.

The main body **4** includes a control device **4a** configured to control the operation of devices and components mounted on multicopter **10,** sensors **4b** connected to the control device **4a,** a communication device **4c** connected to the control device **4a,** and a battery **52.**

The control device **4a** may include, for example, a flight control device such as a flight controller and a higher-level computer (companion computer). The companion computer may perform advanced computational processing such as image processing, obstacle detection, and obstacle avoidance based on sensor data acquired by the sensors **4b.**

The sensors **4b** may include an acceleration sensor, angular velocity sensor, geomagnetic sensor, atmospheric pressure sensor, altitude sensor, temperature sensor, flow sensor, imaging device, laser sensor, ultrasonic sensor, obstacle contact sensor, and GNSS (Global Navigation Satellite System) receiver. The acceleration sensor and angular velocity sensor may be mounted on the main body **4** as components of an IMU (Inertial Measurement Unit). Examples of laser sensors may include a laser range finder used for measuring distance to the ground, and **2D** or **3D** LiDAR (light detection and ranging).

The communication device **4c** may include a wireless communication module for signal transmission and reception with a ground-based transmitter or ground control station (GCS) via an antenna, and a mobile communication module that utilizes cellular communication networks. The communication device **4c** is configured to receive signals such as control commands transmitted from the ground and transmit sensor data such as image data acquired by sensors **4b** as telemetry information. The communication device **4c** may also include functions for communication between multicopters and satellite communication capabilities. The control device **4a** may connect to computers in the cloud through the communication device **4c.** The computer in the cloud may execute some or all of the functions of the companion computer.

A battery **52** is a secondary battery that is configured to store electric power through charging and supply electric power to motors **14** through discharging. Through the operation of battery **52** and the plurality of motors **14,** a plurality of rotors **2** can be rotationally driven to generate desired thrust.

Each of the plurality of rotors **2** generally includes a plurality of blades with fixed pitch angles and generates thrust through rotation. The pitch angles may be variable. Not all of the plurality of rotors **2** need to have the same diameter (propeller diameter), and one or more rotors **2** may have a larger diameter than other rotors **2.** The thrust (static thrust) generated by rotating the rotor **2** is generally proportional to the cube of the rotor's diameter. Therefore, when the rotors **2** of different diameters are equipped, the rotors **2** with relatively large diameters may be called "main rotors" and the rotors **2** with relatively small diameters may be called "sub-rotors". Regardless of the size of the diameter, the rotors **2** capable of generating relatively large thrust and the rotors **2** capable of generating relatively small thrust may be included depending on the configuration of rotation drive device **3.** In such case, the rotors **2** capable of generating relatively large thrust may be called "main rotors" and the rotors **2** capable of generating relatively small thrust may be called "sub-rotors". For example, the rotors **2** that generate relatively large thrust per rotation may be called "main rotors" and the rotors **2** that generate relatively small thrust per rotation may be called "sub-rotors". In one example, main rotors may be positioned further inward than sub-rotors. In other words, the rotors **2** may be positioned such that the distance from the center of the body to the rotation axis of each main rotor is shorter than the distance from the center to the rotation axis of each sub-rotor.

In this example, the rotation drive device **3** has a plurality of motors **14.** As mentioned above, the rotation drive device **3** may include the internal combustion engine **7a.**

FIG. **1D** is a plan view schematically showing a basic configuration example of a multicopter **10** equipped with the second rotation drive device **3B.** In the example shown in FIG. **1D****,** the internal combustion engine **7a** is supported by the main body **4.** In this example, the driving force generated by internal combustion engine **7a** is transmitted to the plurality of rotors **2** through a plurality of power transmission systems **23** to rotate each rotor **2.** The control device **4a** may change the rotational speed of individual rotors **2** by controlling each power transmission system **23.** Rotation drive device **3B** may include a mechanism for changing the pitch angle of blades of each of the plurality of rotors **2.** In that case, the control device **4a** may adjust the lift generated by each rotor **2** by controlling that mechanism to change the blade pitch angles.

In a "parallel hybrid drive" where some of the plurality of rotors **2** are rotated by the internal combustion engine **7a** and other rotors **2** are rotated by the motors **14,** the internal combustion engine **7a** and battery **52** are supported by the main body **4.** At least one of the plurality of rotors **2** is connected to the internal combustion engine **7a** through the power transmission system **23,** and other rotors **2** are connected to the motors **14.**

In such a parallel hybrid drive, the diameter of one or more rotors **2** rotated by the internal combustion engine **7a** may be larger than the diameter of other rotors **2** rotated by the motors **14.** In other words, the internal combustion engine **7a** may be used for rotating the main rotors and the motors **14** may be used for rotating the sub-rotors. In such case, the main rotors are mainly used for generating thrust, and the sub-rotors are used for both generating thrust and attitude control. The main rotors may be called "booster rotors" and the sub-rotors may be called "attitude control rotors".

In the parallel hybrid drive, the internal combustion engine is used for both thrust generation and power generation. By selectively transmitting driving force (torque) generated by the internal combustion engine to either or both of the rotor and electric generator, it is possible to achieve balanced thrust generation and power generation.

When a multicopter is equipped with an internal combustion engine and uses the internal combustion engine for at least one of thrust generation and power generation, this contributes to increased payload and flight duration. It is desirable to perform attitude control of the multicopter by rotating propellers using motors, which have superior response characteristics compared to internal combustion engines. Therefore, in applications where accurate attitude control of the multicopter is required, it is desirable to adopt parallel hybrid drive or series hybrid drive to increase payload and flight duration. Note that when the rotation drive device **3** includes a mechanism for changing the pitch angle of blades of each of the plurality of the rotors **2,** the attitude can also be adjusted by changing the pitch angle of each blade.

Through increased payload and flight duration, the applications of multicopters can be further expanded. For example, in the agricultural field, multicopters are currently being used for agricultural chemical spraying or crop growth monitoring. Various agricultural work can be performed from the air by connecting various ground work machines (hereinafter may be simply referred to as "work machines") to the multicopter. Agricultural work machines are sometimes referred to as "implements". Examples of implements may include sprayers for spraying chemicals on crops, mowers, seeders, spreaders (fertilizer applicators), rakes, balers, harvesters, plows, harrows, or rotary tillers. Work vehicles such as tractors are not included in "implements" in this disclosure.

In the example shown in FIG. **1C****,** an implement **200** capable of dispersing substances such as agricultural chemicals or fertilizers onto a field or crops in the field is connected to multicopter **10.** Increased payload and flight duration enable the implement **200** to achieve a larger size and/or multi-functionality. For example, by changing the implement **200** connected to multicopter **10,** various ground operations (agricultural work) including liquid application, granular application, fertilization, thinning, weeding, transplanting, direct seeding, and harvesting can be performed. The implement **200** may be equipped with mechanisms such as robotic hands. In that case, a single implement **200** can perform various ground operations. When the implement **200** is equipped with space large enough to store materials, the implement **200** can also transport agricultural materials or harvested crops over a wide area. There are various forms of connecting the implement **200** to the multicopter **10.** The multicopter **10** may suspend and tow the implement **200** using a cable. The implement **200** towed by the multicopter **10** can perform ground operations while being towed during flight or hovering of multicopter **10.** The implement **200** during operation may be in the air or on the ground.

In the example shown in FIG. **1C****,** the multicopter **10** is equipped with power supply **76.** The power supply **76** is a device that supplies power to the implement **200** from driving energy sources such as a battery **52** or an electric generator **8** included in the multicopter **10.** Various functions of the implement **200** may be performed using this power. The implement **200** includes actuators such as motors that operate using power obtained from the power supply **76** of the multicopter **10.** The implement **200** preferably includes a battery for storing power. The ESC **16** may be included in the control device **4a.**

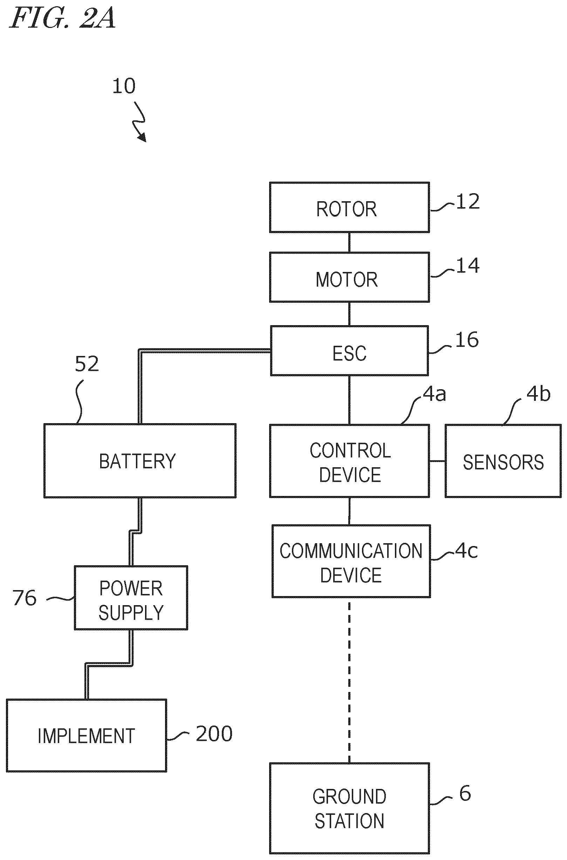

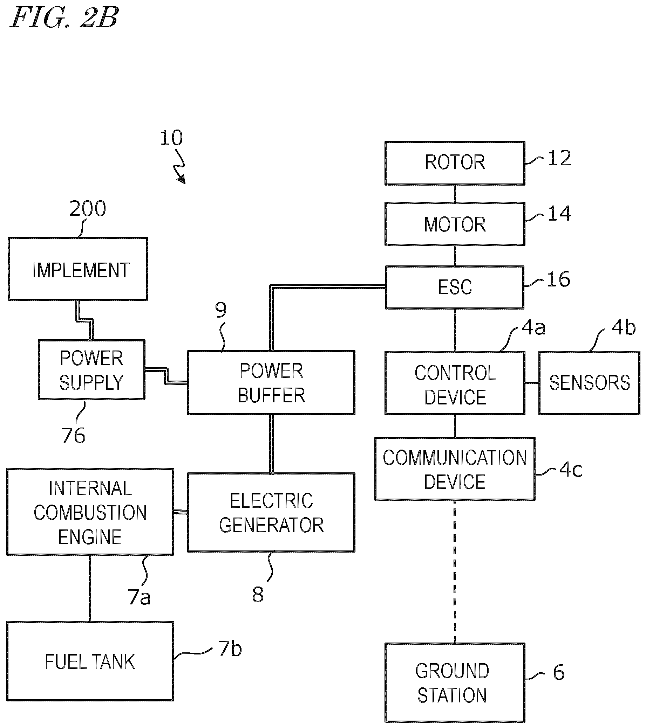

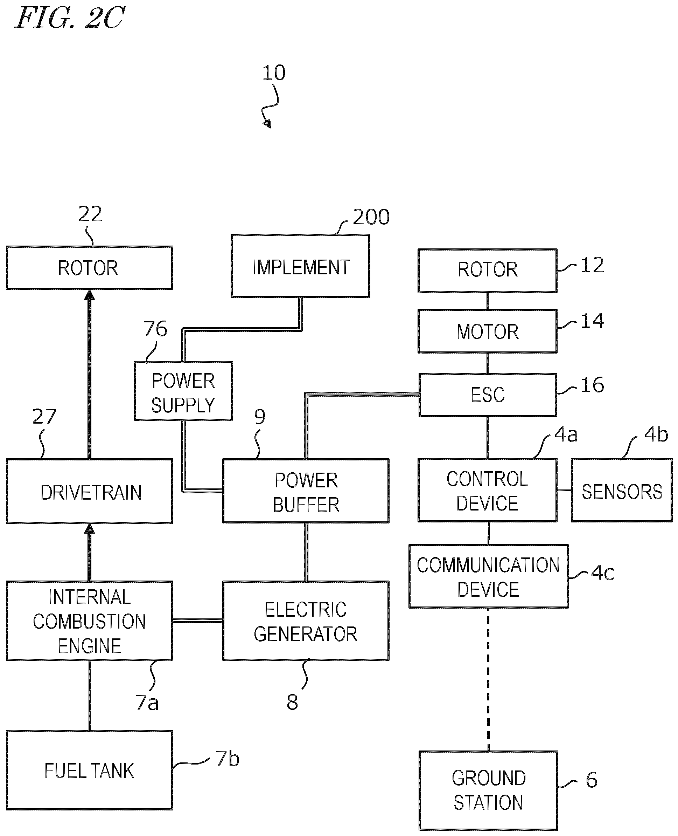

FIG. **2A** shows a block diagram of a basic configuration example of a battery-driven multicopter **10.** The battery-driven multicopter **10** includes a plurality of rotors **12,** a plurality of motors **14,** each driving a respective one of the plurality of rotors **12,** a plurality of ESCs (Electric Speed Controllers) **16** each including a motor drive circuit that drives a respective one of the plurality of motors **14,** a battery **52** that supplies power to each of the plurality of motors **14** through each respective ESC **16,** a control device **4a** for controlling a plurality of ESCs **16** to control attitude while flying, sensors **4b,** a communication device **4c,** and a power supply **76** that is electrically connected to the battery **52.** In FIG. **2A****,** for simplicity, the rotor **12,** the motor **14,** and the ESC **16** are each shown by a single block, but the numbers of rotors **12,** motors **14,** and ESCs **16** are each plural. This also applies to Figs. **2B** and **2C****.**

The control device **4a** may receive control commands wirelessly from, for example, a ground station **6** on the ground through the communication device **4c.** The number of ground stations **6** is not limited to one, and the grand station 6 may be distributed across a plurality of locations. The communication device **4c** may also wirelessly receive control commands from an operator's remote controller on the ground. The control device **4a** may have functions to automatically or autonomously execute takeoff, flight, obstacle avoidance, and landing operations based on sensor data obtained from the sensors **4b.** The control device **4a** may be configured to communicate with the implement **200** connected to the power supply **76** and obtain signals indicating the state of the implement **200** from the implement **200.** Additionally, the control device **4a** may provide signals to control the operation of the implement **200.** Furthermore, the implement **200** may generate signals to instruct the operation of multicopter **10** and transmit them to the control device **4a.** Such communication between the control device **4a** and the implement **200** may be conducted through wired or wireless means.

FIG. **2B** is a block diagram showing a basic configuration example of a series hybrid drive type multicopter **10.** Like the battery-driven multicopter **10,** the series hybrid drive type multicopter **10** includes a plurality of rotors **12,** a plurality of motors **14,** a plurality of ESCs **16,** a control device **4a,** sensors **4b,** and a communication device **4c.** The series hybrid drive type multicopter **10** shown in the figure further includes an internal combustion engine **7a,** a fuel tank **7b** that stores fuel for the internal combustion engine **7a,** an electric generator **8** that is driven by the internal combustion engine **7a** to generate electric power, a power buffer **9** that temporarily stores electric power generated by the electric generator **8,** and a power supply **76** that is electrically connected to the power buffer **9.** The power buffer **9** is, for example, a battery such as a secondary battery. Electric power generated by the electric generator **8** is supplied to the motors **14** through the power buffer **9** and the ESCs **16.** Additionally, the electric power generated by the electric generator **8** may be supplied to the implement **200** through the power supply **76.**

FIG. **2C** is a block diagram showing a basic configuration example of a parallel hybrid drive type multicopter **10.** Like the series hybrid drive type multicopter **10,** the parallel hybrid drive type multicopter **10** includes a plurality of rotors **12,** a plurality of motors **14,** each driving a respective one of the plurality of rotors **12,** a plurality of ESCs **16,** a control device **4a,** sensors **4b,** a communication device **4c,** an internal combustion engine **7a,** a fuel tank **7b,** an electric generator **8,** a power buffer **9,** and a power supply **76.** The parallel hybrid drive type multicopter **10** further includes a drivetrain **27** that transmits driving force from the internal combustion engine **7a,** and the rotor **22** that rotates upon the receiving driving force from the internal combustion engine **7a** through the drivetrain **27.** The rotor **12** and rotor **22** may be distinguished by calling one "first rotor" and the other "second rotor". The number of rotors **22** connected to drivetrain **27** and rotated may be one or two or more.

In the parallel hybrid drive type multicopter **10,** the internal combustion engine **7a** not only drives the electric generator **8** to generate power, but also mechanically transmits energy to the rotor **22** to rotate the rotor **22.** In contrast, in the series hybrid drive type multicopter **10,** all rotors **12** are rotated by electric power generated by the electric generator **8.** Therefore, in the series hybrid drive type multicopter **10,** when the electric generator **8** is, for example, a fuel cell, the internal combustion engine **7a** is not an essential component.

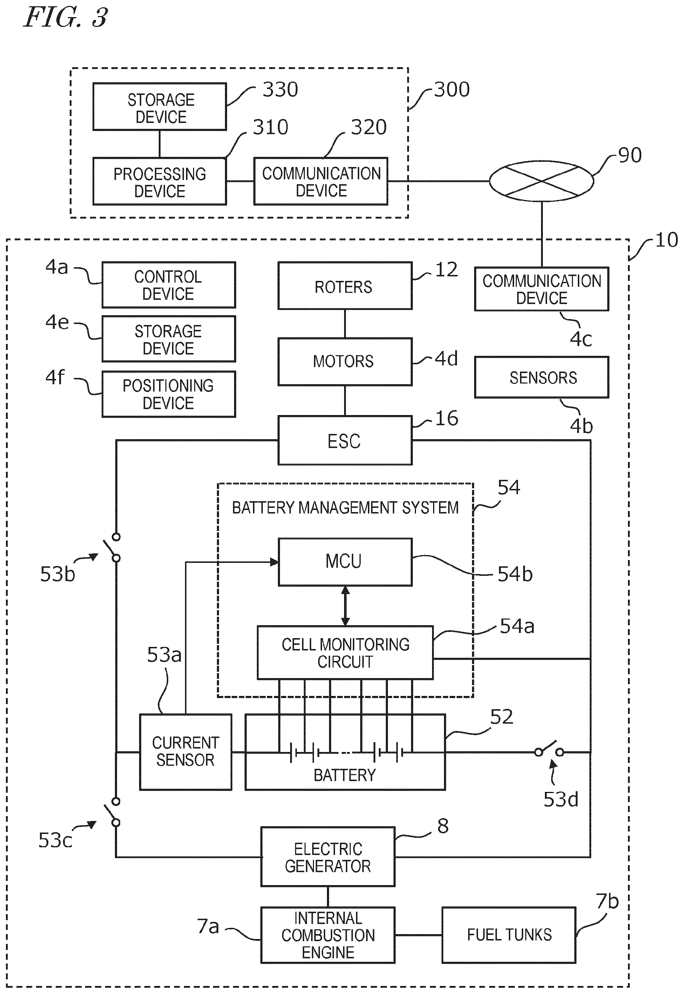

FIG. **3** shows a configuration example of a system including multicopter **10.** The system shown in FIG. **3** includes multicopter **10** and a management device **300** that manages agricultural work performed by the multicopter **10.** The management device **300** is a computer (such as a server in the cloud) connected to multicopter **10** via network **90.** The management device **300** may be a computer system including multiple computers. The management device **300** includes a processing device **310,** a communication device **320,** and a storage device **330.**

In the example of FIG. **3****,** the multicopter **10** includes, generally, a plurality of rotors **12** (first rotors), a plurality of motors **14** that respectively drive the plurality of rotors **12,** a battery **52** that stores power, a control device **4a** configured to control the flight of the multicopter **10,** sensors **4b,** a communication device **4c,** a storage device **4e,** and a positioning device **4f.** In FIG. **3****,** for simplicity, rotors **12,** motors **14,** and ESCs **16** are each shown by a single block, but the numbers of rotors **12,** motors **14,** and ESCs **16** are plural. Also, although not shown in FIG. **3****,** the multicopter **10** may include at least one second rotor **22** driven by internal combustion engine **7a** as shown in FIG. **2C****.** In that case, either "series hybrid" or "parallel hybrid" drive format may be adopted. The multicopter **10** may not include an electric generator **8,** an internal combustion engine **7a,** and a fuel tank **7b.** The multicopter **10** may include a mechanism for charging battery **52** by wire or wirelessly from an external power supply device.

The multicopter **10** includes a control system configured to control the operation of the multicopter **10.** The control system includes a control device **4a,** a communication device **4c,** and a storage device **4e.** The communication device **4c** is an interface for communication with external devices. The communication device **4c** can perform wired and wireless communication complying with various protocols. The communication device **4c** may perform wireless communication complying with Bluetooth^{®} standards and/or Wi-Fi^{®} standards. Both standards include wireless communication standards utilizing the 2.4 GHz frequency band. The communication device **4c** communicates with the communication device **320** in the management device **300.** This communication may be performed via a relay device installed at a data transfer point set up around the work area in the field. Communication between the communication device **4c** and the relay device is performed wirelessly. The communication device **4c** transmits various information such as the position information of the multicopter **10** output from the positioning device **4f** and requests for permission to activate various functions of the multicopter **10,** as described later, to the communication device **320** of the management device **300.** The processing device **310** of the management device **300** can determine whether the position of the multicopter **10** is appropriate or whether the flight is proceeding according to plan, or can grant permission to activate the requested functions based on that information. Note that the term "activation" in this disclosure refers to a process of removing functional restrictions performed at predetermined timing such as at startup or flight initiation. The activation in this disclosure is not necessarily performed for all functions of the multicopter **10** at once, but may be performed individually for each function.

The storage device **4e** may be, for example, a semiconductor memory, magnetic storage device, or optical storage device, or a combination thereof. The storage device **4e** is an independent device from the control device **4a** in the example of FIG. **3****,** but it may be included in the control device **4a.** The storage device **4e** stores various information related to the operation of the multicopter **10.** For example, the storage device **4e** can store map data useful for autonomous flight of the multicopter **10,** and various sensor data acquired by the multicopter **10** during flight from the sensors **4b.**

The positioning device **4f** is a device that performs positioning of the multicopter **10.** The positioning device **4f** includes, for example, a processing circuit that calculates the position of the multicopter **10** based on satellite signals received by a GNSS receiver included in the sensors **4b.** GNSS is a collective term for satellite positioning systems such as GPS (Global Positioning System), QZSS (Quasi-Zenith Satellite System, for example, Michibiki), GLONASS, Galileo, and BeiDou. The positioning device **4f** may include a GNSS receiver. Additionally, the positioning device **4f** may also use signals from an IMU included in the sensors **4b** in addition to signals from the GNSS receiver to determine the position of the multicopter **10.**

The positioning device **4f** may include an RTK receiver. In that case, correction signals transmitted from a base station are used in addition to GNSS signals transmitted from multiple GNSS satellites. The base station may be installed around the field where the multicopter **10** flies (for example, within 10 km of the multicopter **10**). The base station generates correction signals based on GNSS signals received from multiple GNSS satellites and transmits them to the positioning device **4f.** The positioning device **4f** performs positioning by calculating the position of the multicopter **10** based on GNSS signals and correction signals. By using RTK-GNSS, it is possible to perform positioning with an accuracy of, for example, a few centimeters of error. Position information including latitude, longitude, and altitude is obtained through high-precision positioning by RTK-GNSS. Note that the positioning method is not limited to RTK-GNSS, and any positioning method that provides position information with the required accuracy (such as interferometric positioning method or relative positioning method) can be used. For example, positioning using VRS (Virtual Reference Station) or DGPS (Differential Global Positioning System) may be performed.

The multicopter **10** of this embodiment includes a current sensor **53a** that measures current flowing through the battery **52,** and switch elements **53b, 53c, 53d** that define the current path during discharge and charging of the battery **52.** During charging, current flows from the electric generator **8** to the battery **52** through closed switch elements **53c, 53d.** During discharge, current flows from the battery **52** to ESCs **16** and motors **14** through closed switch elements **53b, 53d.** The multicopter **10** may further include other switch elements and/or current sensors. The opening and closing of switch elements **53b, 53c, 53d** may be controlled by the control device **4a.**

The multicopter **10** of this embodiment includes a battery management system **54** that monitors and manages the battery **52.** The battery management system **54** includes a cell monitoring circuit **54a** that monitors the state (such as voltage and temperature) of each of a plurality of single cells (cells) included in the battery **52,** and a microcontroller (Microcontroller Unit: MCU) **54b** that estimates the charging state of the battery **52** and executes battery management operations.

The cell monitoring circuit **54a** may be configured to measure the voltage of each cell and perform cell balancing during charging. The cell monitoring circuit **54a** may include a protection circuit that prevents overcharging and over-discharging of each cell. Such protection circuits may be provided in battery packs, each including multiple cells.

The MCU **54b** may be programmed to perform various calculations for estimating the State Of Charge (SOC) of the battery **52.** The SOC is equal to the Remaining Charge (RC) divided by the Full Charge Capacity (FCC), that is, RC/FCC. The SOC defined in this way may sometimes be called "Relative SOC (RSOC)". The SOC can be estimated by various algorithms.

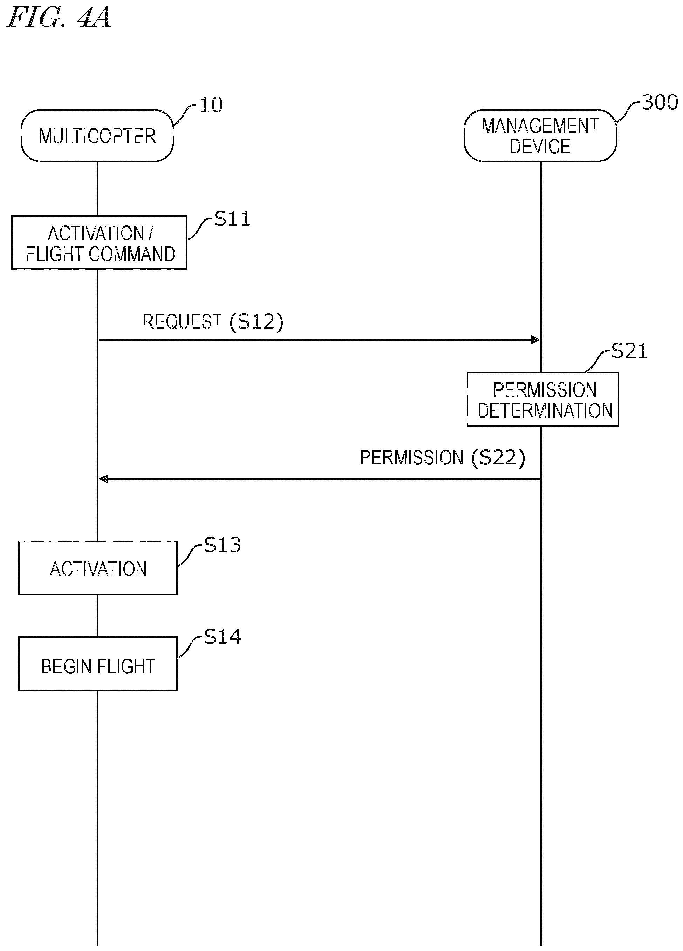

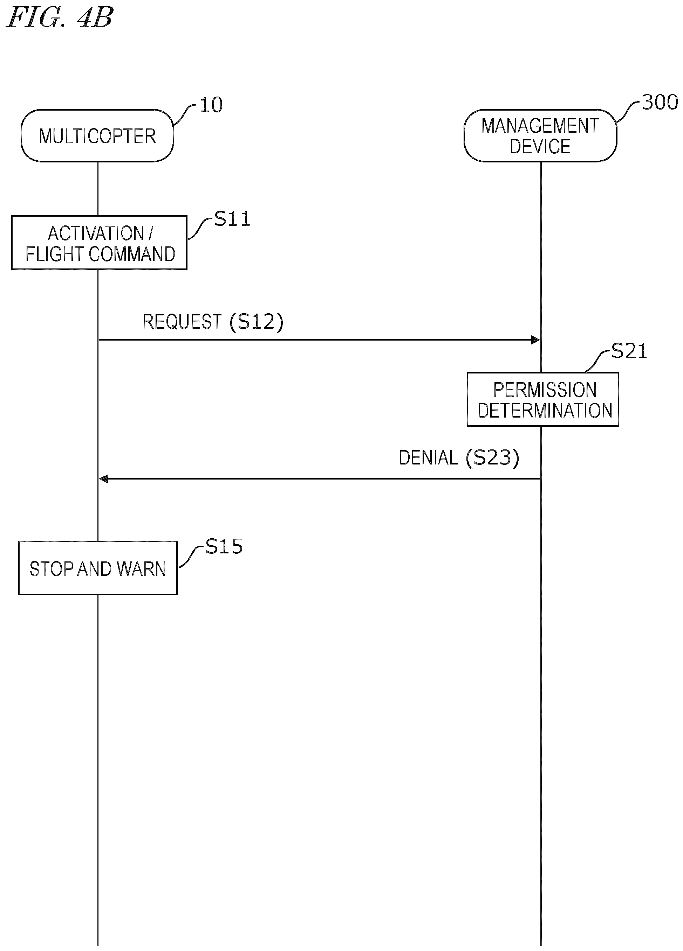

Next, examples of control methods for multicopter **10** will be explained with reference to FIGs. **4A** and **4B****.**

FIG. **4A** shows an example of processing performed between multicopter **10** and management device **300.** In this embodiment, the control device **4a** requests permission from the management device **300** via the communication device **4c** to activate functions associated with planned agricultural work before flight begins, and activates the functions when permitted by the management device **300.** For example, the control device **4a** may be configured to request permission from the management device **300** to activate functions to fly over the work area where agricultural work is planned, and to activate the functions to fly over the work area when permitted by the management device **300.** When an implement **200** for executing agricultural work is connected to the multicopter **10** as shown in FIG. **1B****,** the control device **4a** may request permission from the management device **300** for activation of the function to drive the implement **200** as a function associated with agricultural work. In that case, the control device **4a** activates the function to drive the implement when permitted by the management device **300.**

In the example of FIG. **4A****,** the control device **4a** of multicopter **100** requests permission to activate functions associated with planned agricultural work from the management device **300** when the multicopter **100** is started or when it receives a flight command (Step S11).

The work plan for multicopter **10** is pre-recorded in the storage device **330** of the management device **300.** The work plan is data that defines the plan for agricultural work to be performed by the multicopter **10.** The work plan may include information such as the planned date and time, location, type of work, and/or type of implement to be used for each operation performed by the multicopter **10.** When the communication device **320** receives a request from the multicopter **10** for permission to activate functions associated with planned agricultural work, the processing device **310** of the management device **300** determines whether to permit activation based on the request and the work plan (Step S21). The processing device **310** sends a signal indicating permission or denial to the multicopter **10** via the communication device **320** (Step S22). In the example of FIG. **4A****,** the processing device **310** sends a signal indicating permission to activate to the multicopter **10.**

When the communication device **4c** of the multicopter **10** receives the signal indicating permission to activate, the control device **4a** activates the permitted functions. After that, the control device **4a** begins flight for agricultural work by automatic or manual piloting (Step S14).

FIG. **4B** shows another example of processing performed between multicopter **10** and management device **300.** In the example of FIG. **4B****,** the processing device **310** of the management device **300** makes a determination of denial in response to the activation permission request from the multicopter **10.** The determination of denial may be made, for example, when the multicopter **10** is located in a place different from the field where the planned agricultural work is to be performed, or when it does not have the implement that should be used attached. In the example of FIG. **4B****,** after the permission determination in Step S21, a signal indicating denial is sent to the multicopter **10** (Step S23). When the control device **4a** of the multicopter **10** receives the denial signal, it may be configured, for example, to stop the operation of the multicopter **10** and send a warning signal to an external device. The external device may be an information terminal used by the user of the multicopter **10.** The information terminal may be configured to output an image or sound indicating that the multicopter **10** is attempting to perform an unplanned operation in response to the warning signal. This allows the user to be alerted about the possibility of theft or unauthorized use. The control device **4a** may also send the warning signal to the management device **300.** In that case, a warning is notified to the information terminal used by the user via the management device **300.**

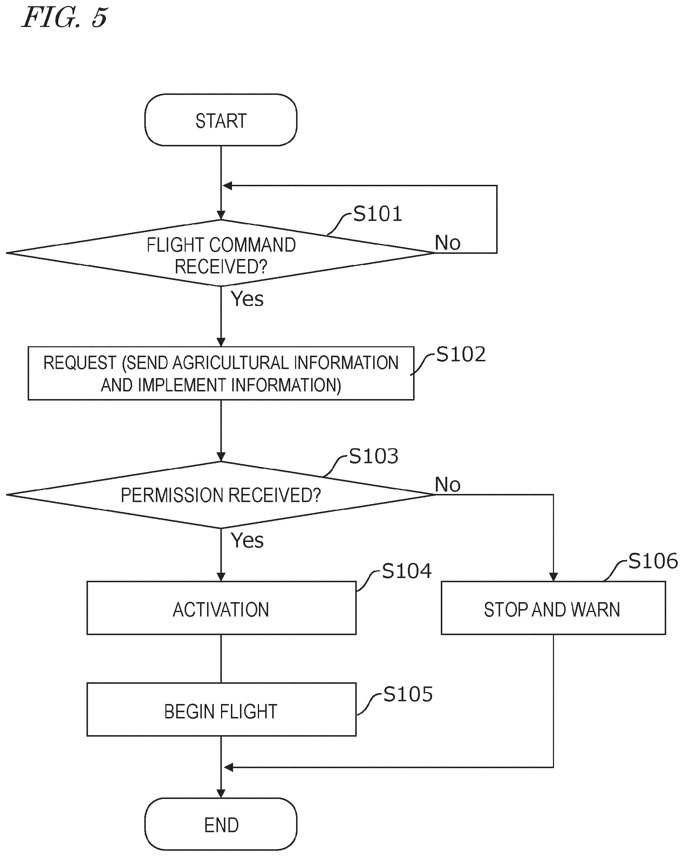

FIG. **5** is a flowchart showing an example of processing executed by the control device **4a.** In the example of FIG. 5, after startup of the multicopter **10,** the control device **4a** determines whether a flight command has been received (Step S101). The flight command may be transmitted from a remote controller used by the user or a computer that performs remote operation of the multicopter **10.** When a flight command is received, the control device **4a** requests permission from the management device **300** to activate functions to start flight (Step S102). At this time, the control device **4a** may also be configured to transmit information indicating the type of agricultural work to be performed (agricultural work information) and/or information indicating the type of implement connected to the multicopter **10** (implement information). In that case, the processing device **310** of the management device **300** may be configured to determine whether to permit activation by comparing the transmitted agricultural work information and/or implement information with the predetermined work plan.

Additionally, when requesting permission to activate from the management device **300,** the control device **4a** may send route information regarding the flight path for the planned agricultural work and/or area information regarding the work area for the agricultural work via the communication device **4c** to the management device **300.** In that case, the management device **300** determines whether to permit activation based at least on the predetermined work plan for the multicopter **10** and the transmitted route information and/or area information. This makes it possible to avoid granting activation when the requested flight path and/or work area does not match the work plan.

The control device **4a** may also send position information of the multicopter **10** output from the positioning device **4f** via the communication device **4c** to the management device **300** when requesting permission to activate from the management device **300.** In that case, the management device **300** determines whether to permit activation based at least on the predetermined work plan for the multicopter **10** and the transmitted position information. This makes it possible to avoid granting activation when the position of the multicopter **10** is not consistent with the position of the field indicated in the work plan.

After Step S102, the control device **4a** determines whether activation has been permitted (Step S103). If activation has been permitted, the control device **4a** activates the permitted functions (Step S104) and begins flight (Step S105). If activation has not been permitted, the control device **4a** stops the operation of the multicopter **10** and sends a warning to an external device (Step S106).

With these operations, even if the multicopter **10** is stolen, unauthorized use can be suppressed.

In the example of FIG. **5****,** the control device **4a** sends a permission request to activate functions associated with planned agricultural work to the management device **300** in response to a flight command. Alternatively, the control device **4a** may send the permission request when the power of the multicopter **10** is turned on and it begins to start up. The control device **4a** may make the permission request at startup every time or at a frequency of once every several times. For example, the control device **4a** may count the number of startups of the multicopter **10** and request permission to activate from the management device **300** when the number of startups reaches a predetermined number. This makes it possible to prevent unauthorized use of the multicopter **10** more than the predetermined number of times if the multicopter **10** is stolen.

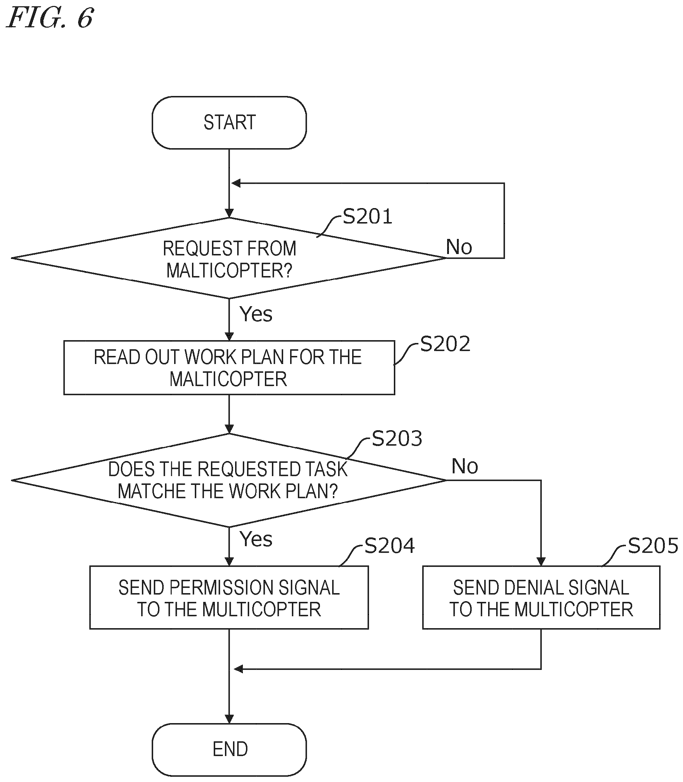

FIG. **6** is a flowchart showing an example of processing executed by the processing device **310** of the management device **300.** In the example of FIG. **6****,** the processing device **310** waits for a request for permission to activate from the multicopter **10** (Step S201). Upon receiving the request, the processing device **310** reads out the work plan for that multicopter **10** from the storage device **4e** (Step S202). The processing device **310** determines whether the work related to the request matches the work plan (Step S203). If the work related to the request matches the work plan, the processing device **310** sends a permission signal to the multicopter **10** (Step S204). If the work related to the request does not match the work plan, the processing device **310** sends a denial signal to the multicopter **10** (Step S205).

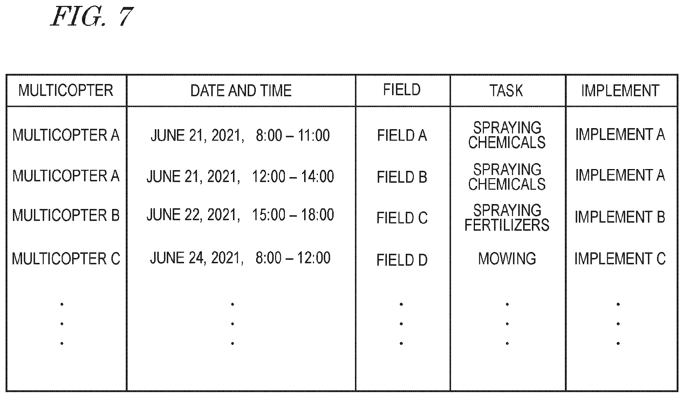

FIG. 7 shows an example of a work plan. The work plan shown in FIG. **7** includes an identifier of the multicopter **10,** the planned date and time for the work, a field identifier, information indicating the work content, and information indicating the type of implement to be used. By referring to such a work plan, it is possible to appropriately determine whether to permit requests from the multicopter **10.** The work plan is not limited to the information shown in FIG. **5** and may include other information (such as information on the types of chemicals or fertilizers to be used). The work plan may be created based on operations by a user using an information terminal.

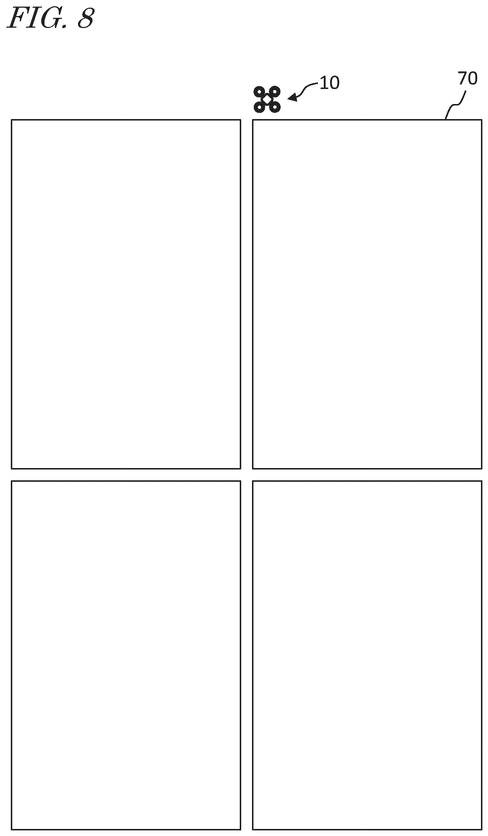

Next, the restriction of functions of the multicopter **10** in this embodiment will be explained in more detail with reference to FIGs. **8** to **10****.**

FIG. **8** schematically shows an example of an environment in which the multicopter **10** flies. The multicopter **10** in this embodiment flies while performing agricultural work over a pre-set work area **70.** The work area **70** may be set within a field. The multicopter **10** can perform agricultural work such as agricultural chemical spraying while flying over the work area **70.** Instead of the multicopter **10** itself performing agricultural work, an implement **200** connected to (or suspended from) the multicopter **10,** as shown in the example of FIG. **1B****,** may perform the agricultural work. Even in such cases, in this specification, it is expressed as "the multicopter **10** executes agricultural work." The multicopter **10** may fly over the field automatically, autonomously, or by remote control. The multicopter **10** can operate in both autonomous driving mode and manual driving mode.

In this embodiment, as mentioned earlier, before the multicopter **10** begins to fly, it requests permission from the management device **300** to activate functions associated with planned agricultural work, and only when permitted, activates those functions. When the request is permitted, the multicopter **10** becomes capable of flying over the work area **70** within the field.

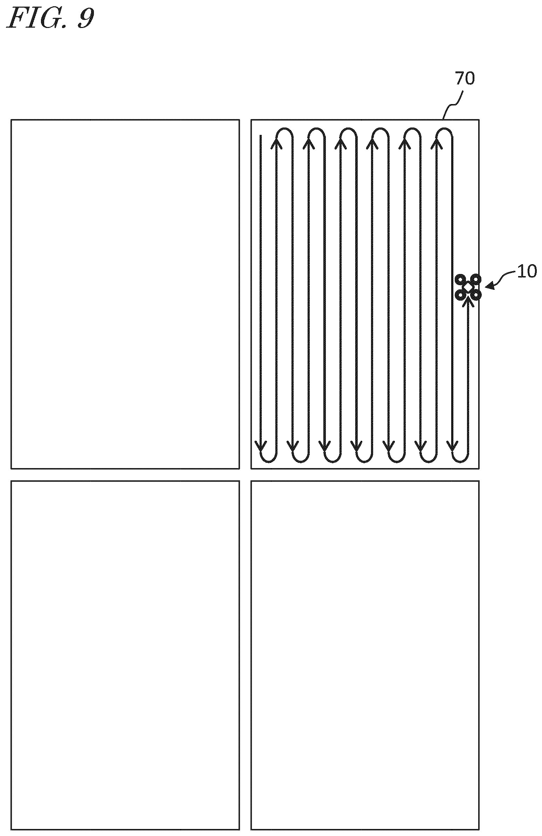

FIG. **9** schematically shows the multicopter **10** flying while performing agricultural work within the work area **70.** In FIG. **9****,** the arrow lines shown within the work area **70** schematically indicate the flight path that the multicopter **10** has passed through by autonomous driving mode. In autonomous driving mode, the multicopter **10** is controlled to fly along a predetermined target path. In autonomous driving mode, the control device **4a** makes the multicopter **10** fly along the target path based on the position of the multicopter **10** measured by the positioning device **4f** and the target path set over the work area **70.** The target path may be pre-set by the user, and that information is recorded in the storage device **4e.** The user can set the work area **70** and the target path through operations using a GUI (Graphical User Interface) including a map of the field displayed on a setting information terminal.

When the multicopter **10** performs agricultural work in this way, it often flies along a predetermined path over the work area **70** such as a field. However, the work that an agricultural multicopter **10** can perform is not limited to such examples and may include work carried out over a wide area including multiple fields, such as replenishment and transport of agricultural materials, transport of harvested crops, monitoring of crop growth conditions, surveying, and map creation. When the multicopter **10** performs transport of agricultural materials or harvested crops, for example, the multicopter **10** may fly over areas other than fields (including areas with forests, rivers, etc.) automatically, autonomously, or by remote control.

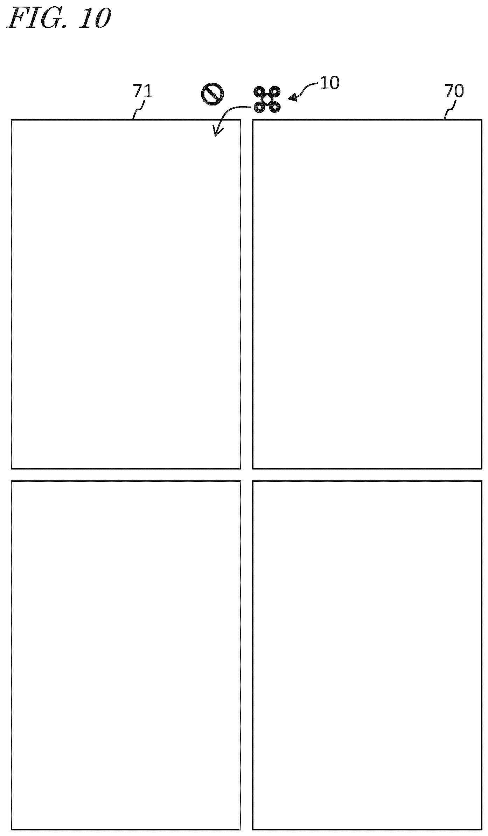

FIG. **10** shows an example where activation is not permitted. In the example of FIG. **10****,** the control device **4a** requests permission from the management device **300** for the multicopter **10** to fly over a non-work area **71** where agricultural work is not planned at that date and time. In this case, the control device **4a** sends a request including an identifier of the non-work area **71** to the management device **300.** The management device **300,** based on the work plan, sends a signal to the multicopter **10** indicating that the request is not permitted because no agricultural work is planned in the non-work area **71** at that date and time. Based on that signal, the control device **4a** stops the operation of the multicopter **10** and outputs a warning. This avoids the multicopter **10** flying over the non-work area **71** where work is not planned.

In this way, the control device **4a** activates functions such as flight of the multicopter **10** only when permitted by the management device **300.** The control device **4a** may also activate the remote controller for the multicopter **10** in addition to the permitted functions of the multicopter **10** when activation permission is received. This allows the remote controller to be usable only when permitted by the management device **300,** thus preventing unauthorized use of the remote controller.

The control device **4a** may also be configured to activate the positioning device **4f** only when activation permission is received. This restricts the functions of the multicopter **10** by making the positioning device **4f** unusable when activation is not permitted due to unauthorized use.

The control device **4a** may count the number of times activation was not permitted, and notify the management device **300** when the count reaches a predetermined number (for example, 3, 5, 10, etc.). The count may be reset when activation is permitted. In response to the notification, the management device **300** may send a command to the multicopter **10** to move to a specified location. Alternatively, instead of the control device **4a,** the management device **300** may count the number of times it denied requests from the multicopter **10,** and when the count reaches a predetermined number, send a command to the multicopter **10** to move to a specified location. In that case, the control device **4a** moves the multicopter **10** to the specified location in response to the command from the management device **300.** The specified location may be, for example, a storage facility for the multicopter **10** specified by the user, or a specific location such as a police station. Alternatively, when the number of times activation was not permitted reaches a predetermined number, the management device **300** may send a notification indicating suspicion of unauthorized use to an information terminal used by the user of the multicopter **10.** The notification may include the position of the multicopter **10** measured by the positioning device **4f** of the multicopter **10.** This makes it easier to find the multicopter **10** even if it has been stolen.

The control device **4a** in the embodiment of the present disclosure may be realized by a digital computer system programmed to execute each process explained with reference to FIG. **5****.** Also, the processing device **310** of the management device **300** may be realized by a digital computer system programmed to execute each process explained with reference to FIG. **6****.**

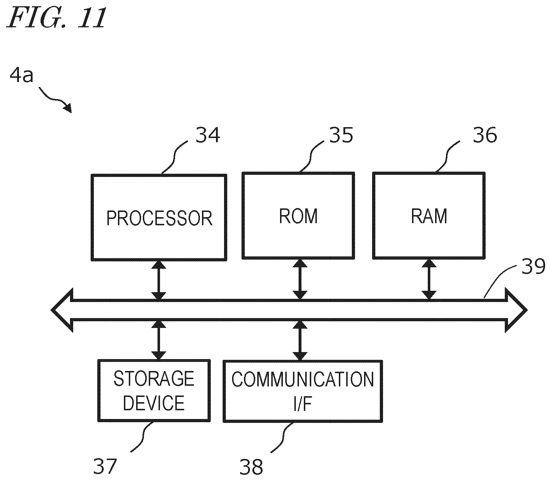

FIG. **11** is a block diagram showing an example of the hardware configuration of the control device **4a.** The control device **4a** includes a processor **34,** ROM (Read Only Memory) **35,** RAM (Random Access Memory) **36,** a storage device **37,** and a communication I/F **38.** These components are interconnected via a bus **39.** In the example of FIG. **11****,** the control device **4a** includes the storage device **37** and the communication I/F **38.** In this case, the storage device **37** and the communication I/F **38** may substitute the functions of the storage device **4e** and the communication device **4c** shown in FIG. **3****.**

The processor **34** is one or more semiconductor integrated circuits, also referred to as a central processing unit (CPU) or microprocessor. The processor **34** sequentially executes computer programs stored in the ROM **35** to implement the aforementioned processes. The processor **34** is broadly interpreted to include terms such as FPGA (Field Programmable Gate Array) with CPU, GPU (Graphic Processor Unit), ASIC (Application Specific Integrated Circuit), or ASSP (Application Specific Standard Product).

The ROM **35** is, for example, a writable memory (such as PROM), rewritable memory (such as flash memory), or read-only memory. The ROM **35** stores programs that control the operation of the processor. The ROM **35** need not be a single recording medium but may be a collection of multiple recording media. Part of the multiple collections may be removable memory.

The RAM **36** provides a work area for temporarily expanding programs stored in the ROM **35** during boot-up. The RAM **36** need not be a single recording medium but may be a collection of multiple recording media.

The communication I/F **38** is an interface for communication between the control device **4a** and other electronic components or electronic control units (ECUs). For example, the communication I/F **38** can perform wired communication complying with various protocols. The communication I/F **38** may perform wireless communication complying with Bluetooth^{®} standards and/or Wi-Fi^{®} standards. Both standards include wireless communication standards utilizing the 2.4 GHz frequency band.

The storage device **37** may be, for example, a semiconductor memory, magnetic storage device, or optical storage device, or a combination thereof. The storage device **37** can store, for example, map data useful for autonomous flight of the multicopter **10,** and various sensor data acquired by the multicopter **10** during flight.

Note that, as mentioned earlier, the control device **4a** may include, for example, a flight control device such as a flight controller and a higher-level computer (companion computer). The companion computer may execute each process shown in FIGs. **8****,** **9****,** or **11** and provide flight-related commands from the companion computer to the flight controller based on the results of those processes.

The processing device **310** of the management device **300** may also have a hardware configuration similar to that shown in FIG. **11****.**

A system providing various functions in the above embodiment can also be installed later on multicopters that do not have those functions. Such systems may be manufactured and sold independently from multicopters. Computer programs used in such systems may also be manufactured and sold independently from multicopters. Computer programs may be provided stored on a non-transitory computer-readable storage medium, for example. Computer programs may also be provided by downloading via a telecommunications line (such as the Internet).

As described above, the present disclosure includes the control system, unmanned aerial vehicle, management device, control method, and management method described in the following items.

[Item 1] A control system for an agricultural unmanned aerial vehicle, comprising:
a communication device configured to communicate with a management device to manage agricultural work performed by the unmanned aerial vehicle; and
a control device configured to control operation of the unmanned aerial vehicle, wherein
the control device is configured, prior to start of flight, to request permission from the management device, via the communication device, to activate functions associated with planned agricultural work, and to activate the functions when permitted by the management device.

[Item 2] The control system according to Item 1, wherein the control device is configured to request permission from the management device to activate a function for flying over a work area where agricultural work is planned as a function associated with the agricultural work, and to activate the function for flying over the work area when permitted by the management device.

[Item 3] The control system according to Item 1 or 2, wherein
the unmanned aerial vehicle is configured to be connected to a ground work implement configured to execute the agricultural work,
the control device is configured to
request permission from the management device to activate a function to drive the ground work implement as a function associated with the agricultural work, and
activate the function to drive the ground work implement when permitted by the management device.

[Item 4] The control system according to any one of Items 1 to 3, wherein the control device is configured to request the permission to activate from the management device when the unmanned aerial vehicle starts up or receives a flight command.

[Item 5] The control system according to any one of Items 1 to 4, wherein the control device is configured to count the number of startups of the unmanned aerial vehicle, and to request the permission to activate from the management device when the number of startups reaches a predetermined number.

[Item 6] The control system according to any one of Items 1 to 5, wherein
the unmanned aerial vehicle includes a positioning device, and
the control device is configured to activate the positioning device upon receiving permission to activate.

[Item 7] The control system according to any one of Items 1 to 6, wherein the control device is configured to activate a remote controller for the unmanned aerial vehicle upon receiving permission to activate.

[Item 8] The control system according to any one of Items 1 to 7, wherein the control device is configured to count the number of times activation was not permitted, and to notify the management device when the count reaches a predetermined number.

[Item 9] The control system according to Item 8, wherein the control device is configured, after notifying the management device, to move the unmanned aerial vehicle to a specified location in response to a command from the management device.

[Item 10] The control system according to any one of Items 1 to 9, wherein:
the control device is configured, when requesting permission to activate from the management device, to transmit work information indicating a type of the planned agricultural work to the management device via the communication device; and
the management device is configured to determine whether to permit activation based at least on a predetermined work plan for the unmanned aerial vehicle and the transmitted work information.

[Item 11] The control system according to any one of Items 1 to 10, wherein:
the unmanned aerial vehicle is configured to be connected to a ground work implement configured to execute the agricultural work;
the control device is configured, when requesting permission to activate from the management device, to transmit implement information indicating a type of the ground work implement connected to the unmanned aerial vehicle to the management device via the communication device; and
the management device is configured to determine whether to permit activation based at least on a predetermined work plan for the unmanned aerial vehicle and the transmitted implement information.

[Item 12] The control system according to any one of Items 1 to 11, wherein
the control device is configured, when requesting permission to activate from the management device, to transmit route information regarding a flight path for the planned agricultural work and/or area information regarding a work area for the agricultural work to the management device via the communication device, and
the management device is configured to determine whether to permit activation based at least on a predetermined work plan for the unmanned aerial vehicle and the transmitted route information and/or area information.

[Item 13] The control system according to any one of Items 1 to 12, wherein
the unmanned aerial vehicle includes a positioning device configured to output position information of the unmanned aerial vehicle,
the control device is configured, when requesting permission to activate from the management device, to transmit the position information to the management device via the communication device, and
the management device is configured to determine whether to permit activation based at least on a predetermined work plan for the unmanned aerial vehicle and the transmitted position information.

[Item 14] An unmanned aerial vehicle comprising:
the control system according to any one of Items 1 to 13; and
a plurality of rotors controlled by the control system.

[Item 15] A management device for managing agricultural work performed by an agricultural unmanned aerial vehicle, comprising:
a communication device configured to communicate with the unmanned aerial vehicle;
a storage device to store a work plan for the unmanned aerial vehicle; and
a processing device configured, when the communication device receives a request from the unmanned aerial vehicle for permission to activate functions associated with planned agricultural work, to determine whether to permit activation based on the request and the work plan, and to send a signal indicating permission or denial to the unmanned aerial vehicle via the communication device.

[Item 16] A control method for an agricultural unmanned aerial vehicle, comprising:
requesting permission from a management device to manage agricultural work performed by the unmanned aerial vehicle to activate functions associated with planned agricultural work prior to start of flight; and
activating the functions when permitted by the management device.

[Item 17] A method executed by a management device to manage agricultural work performed by an agricultural unmanned aerial vehicle, comprising:
receiving a request from the unmanned aerial vehicle for permission to activate functions associated with planned agricultural work;
determining whether to permit activation based on the request and a work plan for the unmanned aerial vehicle; and
sending a signal indicating permission or denial to the unmanned aerial vehicle.

### INDUSTRIAL APPLICABILITY

The unmanned aerial vehicles according to the present disclosure may be widely utilized not only for applications such as aerial photography, surveying, logistics, and agricultural spraying, but also for ground work related to agricultural work, and transportation of harvested crops and agricultural materials.

### REFERENCE SIGNS LIST

**2**...rotor (propeller), **3**...rotation drive device, **4**...main body, **4a**...control device, **4b**...sensors, **4c**...communication device, **4d**...electric motor, **4e**...storage device, **4f**...positioning device, **5**...body frame, **10**...multicopter, **12**...sub-rotor, **12a**...propeller, **12b**...propeller, **14**...motor, **16**...ESC, **22**...main rotor, **30**...power transmission device, **31**...transmission coil, **32**...transmission circuit, **33**...beacon transmitter, **40**...power receiving device, **41**...receiving coil, **42**...receiving circuit, **43**...beacon receiver, **52**...battery, **54**...battery management system, **70**...work area, **71**...non-work area, **300**...management device, **310**...processing device, **320**...communication device, **330**...storage device

## Claims

1. A control system for an agricultural unmanned aerial vehicle, comprising:
a communication device configured to communicate with a management device to manage agricultural work performed by the unmanned aerial vehicle; and
a control device configured to control operation of the unmanned aerial vehicle, wherein
the control device is configured, prior to start of flight, to request permission from the management device, via the communication device, to activate functions associated with planned agricultural work, and to activate the functions when permitted by the management device.

2. The control system according to Claim 1, wherein the control device is configured to request permission from the management device to activate a function for flying over a work area where agricultural work is planned as a function associated with the agricultural work, and to activate the function for flying over the work area when permitted by the management device.

3. The control system according to Claim 1 or 2, wherein
the unmanned aerial vehicle is configured to be connected to a ground work implement configured to execute the agricultural work,
the control device is configured to
request permission from the management device to activate a function to drive the ground work implement as a function associated with the agricultural work, and
activate the function to drive the ground work implement when permitted by the management device.

4. The control system according to any one of Claims 1 to 3, wherein the control device is configured to request the permission to activate from the management device when the unmanned aerial vehicle starts up or receives a flight command.

5. The control system according to any one of Claims 1 to 4, wherein the control device is configured to count the number of startups of the unmanned aerial vehicle, and to request the permission to activate from the management device when the number of startups reaches a predetermined number.

6. The control system according to any one of Claims 1 to 5, wherein
the unmanned aerial vehicle includes a positioning device, and
the control device is configured to activate the positioning device upon receiving permission to activate.

7. The control system according to any one of Claims 1 to 6, wherein the control device is configured to activate a remote controller for the unmanned aerial vehicle upon receiving permission to activate.

8. The control system according to any one of Claims 1 to 7, wherein the control device is configured to count the number of times activation was not permitted, and to notify the management device when the count reaches a predetermined number.

9. The control system according to Claim 8, wherein the control device is configured, after notifying the management device, to move the unmanned aerial vehicle to a specified location in response to a command from the management device.

10. The control system according to any one of Claims 1 to 9, wherein:
the control device is configured, when requesting permission to activate from the management device, to transmit work information indicating a type of the planned agricultural work to the management device via the communication device; and
the management device is configured to determine whether to permit activation based at least on a predetermined work plan for the unmanned aerial vehicle and the transmitted work information.

11. The control system according to any one of Claims 1 to 10, wherein:
the unmanned aerial vehicle is configured to be connected to a ground work implement configured to execute the agricultural work;
the control device is configured, when requesting permission to activate from the management device, to transmit implement information indicating a type of the ground work implement connected to the unmanned aerial vehicle to the management device via the communication device; and
the management device is configured to determine whether to permit activation based at least on a predetermined work plan for the unmanned aerial vehicle and the transmitted implement information.

12. The control system according to any one of Claims 1 to 11, wherein
the control device is configured, when requesting permission to activate from the management device, to transmit route information regarding a flight path for the planned agricultural work and/or area information regarding a work area for the agricultural work to the management device via the communication device, and
the management device is configured to determine whether to permit activation based at least on a predetermined work plan for the unmanned aerial vehicle and the transmitted route information and/or area information.

13. The control system according to any one of Claims 1 to 12, wherein
the unmanned aerial vehicle includes a positioning device configured to output position information of the unmanned aerial vehicle,
the control device is configured, when requesting permission to activate from the management device, to transmit the position information to the management device via the communication device, and
the management device is configured to determine whether to permit activation based at least on a predetermined work plan for the unmanned aerial vehicle and the transmitted position information.

14. An unmanned aerial vehicle comprising:
the control system according to any one of Claims 1 to 13; and
a plurality of rotors controlled by the control system.

15. A management device for managing agricultural work performed by an agricultural unmanned aerial vehicle, comprising:
a communication device configured to communicate with the unmanned aerial vehicle;
a storage device to store a work plan for the unmanned aerial vehicle; and
a processing device configured, when the communication device receives a request from the unmanned aerial vehicle for permission to activate functions associated with planned agricultural work, to determine whether to permit activation based on the request and the work plan, and to send a signal indicating permission or denial to the unmanned aerial vehicle via the communication device.
